# EUROPÄISCHE PATENTSCHRIFT

(11) **EP 2 499 689 B1**
(45) Veröffentlichungstag und Bekanntmachung des Hinweises auf die Patenterteilung: **14.06.2017**
(21) Anmeldenummer: 10762630.1
(22) Anmeldetag: 22.09.2010
(51) Int. Cl.: H01M 16/00, H02J 7/00, B60L 11/18, H01M 10/42

(54) **BATTERIESYSTEM MIT UNTERSCHIEDLICHEN ZELLTYPEN**
BATTERY SYSTEM HAVING VARYING CELL TYPES
SYSTÈME BATTERIE DOTÉ DE DIFFÉRENTS TYPES D'ÉLÉMENTS

(30) Priorität: 10.11.2009 DE 102009046565
(43) Veröffentlichungstag der Anmeldung: 19.09.2012
(73) Patentinhaber: Samsung SDI Co., Ltd., Gyeonggi-do (KR); Robert Bosch GmbH, 70442 Stuttgart (DE)
(72) Erfinder: FETZER, Joachim, 73342 Bad-Ditzenbach (DE); BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2010/063970
(87) Internationale Veröffentlichungsnummer: WO 2011/057845

(56) Entgegenhaltungen:
- EP-A2- 0 437 129
- US-A- 3 987 352
- US-A- 4 770 954

## Beschreibung

### Stand der Technik

Es besteht ein wachsender Bedarf an Batteriesystemen, welche in stationären Anwendungen wie Windkraftanlagen und Notstromsystemen oder aber in Fahrzeugen zum Einsatz kommen sollen. Alle diese Anforderungen stellen hohe Anforderungen an die Zuverlässigkeit und Ausfallsicherheit. Der Grund hierfür ist, dass ein vollständiger Ausfall der Spannungsversorgung durch das Batteriesystem zu einem Ausfall des Gesamtsystems führen kann. So werden bei Windkraftanlagen Batterien eingesetzt, um bei starkem Wind die Rotorblätter zu verstellen und die Anlage so vor übermäßigen mechanischen Belastungen zu schützen, die die Windkraftanlage beschädigen oder sogar zerstören können. Im Falle des Ausfalls der Batterie eines Elektroautos würde dieses fahruntüchtig. Ein Notstromsystem wiederum soll gerade den unterbrechungsfreien Betrieb z.B. eines Krankenhauses sicherstellen und daher selbst möglich nicht ausfallen können.

Um die für die jeweilige Anwendung geforderte Leistung und Energie zur Verfügung stellen zu können, werden einzelne Batteriezellen in Serie und teilweise zusätzlich parallel geschaltet. Für eine gegebene Anwendung können beispielsweise eine Ausgangsspannung, eine bestimmte mindestens zu garantierende Ausgangsleistung und eine Mindestkapazität gefordert werden. Bei einer Serienschaltung von Batteriezellen ist das System jedoch durch diese Anforderungen überbestimmt. Diese Problematik macht dann den Einsatz von Zellen notwendig, die in ihren Anforderungen exakt auf die Bedürfnisse des Kunden bzw. der Anwendung abgestimmt sind, was mit hohen Kosten verbunden ist.

Wünschenswert wäre eine Produktion von nur zwei unterschiedlichen Zelltypen, wie beispielsweise Energiezellen, die pro gegebenen Volumen einen hohen Energiegehalt haben, aber nur vergleichsweise wenig Leistung zur Verfügung stellen können, und Leistungszellen, die einen niedrigeren Energiegehalt pro Volumen aufweisen, dafür aber eine größere Leistung zur Verfügung stellen können. In einem Batteriesystem nach dem Stand der Technik ließen sich diese beiden Zelltypen jedoch nicht vermischen, da die Serienschaltung dies verbietet, weil alle Zellen vom selben Strom durchflossen werden.

Die Druckschrift D1 offenbart ein Stromversorgungssystem umfassend eine erste Batterie mit einer relativ hohen Leistung und einer geringen Kapazität, beispielsweise eine Alkali-Speicherbatterie, eine zweite Batterie mit einer im Vergleich zur ersten Batterie größeren Kapazität, beispielsweise eine Brennstoffzelle, wobei ein Teil des Entladestroms der zweite Batterie zum Laden der ersten Batterie genutzt wird.

### Offenbarung der Erfindung

Die Erfindung ist durch die in Anspruch 1 genannten Merkmale definiert.

Ein erster Erfindungsaspekt führt daher ein Batteriemodul mit einem ersten Energiespeicher, einem zweiten Energiespeicher und einer Diode ein. Der erste Energiespeicher ist ausgebildet, eine erste Ausgangsspannung zu erzeugen und an einem ersten Ausgangsterminal auszugeben. Der zweite Energiespeicher ist ausgebildet, eine zweite Ausgangsspannung, niedriger als die erste Ausgangsspannung, zu erzeugen und an einem zweiten Ausgangsterminal auszugeben. Die Diode weist eine mit dem ersten Ausgangsterminal verbundene Kathode und eine mit dem zweiten Ausgangsterminal verbundene Anode auf.

Vorzugsweise sind dabei der erste Energiespeicher zudem ausgebildet, eine erste maximale Ausgangsleistung zur Verfügung zu stellen, und der zweite Energiespeicher, eine zweite maximale Ausgangsleistung, höher als die erste maximale Ausgangsleistung, zur Verfügung zu stellen.

Das Batteriemodul der Erfindung verbindet einen ersten Energiespeicher, der auf einen hohen Energiegehalt pro Volumen optimiert ist, mit einem zweiten Energiespeicher, der auf eine hohe maximale Leistung optimiert ist, und verbindet so alle wesentlichen Anforderungen an ein Batteriemodul. Die Erfindung sieht hierbei vor, die Ausgänge der beiden Energiespeicher durch eine Diode zu verbinden, welche ohne Last in Sperrrichtung geschaltet ist. Bei geringer Last liefert der erste Energiespeicher den notwendigen Strom, während der zweite Energiespeicher inaktiv bleibt. Steigt jedoch die Belastung, wird der erste Energiespeicher nicht mehr die benötigte Leistung zur Verfügung stellen können und die Ausgangsspannung des ersten Energiespeichers wird demzufolge einbrechen. Sinkt die Ausgangsspannung des ersten Energiespeichers und die des noch unbelasteten zweiten Energiespeichers, schaltet die Diode durch und der Teil der Ausgangsleistung, der aus dem ersten Energiespeicher nicht zur Verfügung gestellt werden kann, wird nun vom zweiten Energiespeicher bereitgestellt. Der zweite Energiespeicher fungiert quasi als automatisch zugeschalteter Zusatzenergiespeicher, um besonders hohe Leistungsanforderungen abzufangen.

Bevorzugt enthält der zweite Energiespeicher wenigstens eine Leistungszelle, insbesondere eine Serienschaltung von Leistungszellen.

Der erste Energiespeicher enthält wenigstens eine Energiezelle, bevorzugt eine Serienschaltung von Energiezellen.

Dabei weist der erste Energiespeicher einen DC/DC-Umsetzer auf, welcher eingangsseitig mit der einen Energiezelle oder der Serienschaltung von Energiezellen und ausgangsseitig mit dem ersten Ausgangsterminal verbunden ist. Der DC/DC-Umsetzer kann die Ausgangsspannung der Batteriezellen von der für eine gegegebene Anwendung geforderten Spannung abkoppeln und so die Ausgangsspannung des ersten Energiespeichers stabilisieren. Die Ausgangsspannung des DC/DC-Umsetzers wird jedoch zwangsläufig einbrechen, wenn die maximal bereitstellbare Leistung nicht ausreicht, um die vorliegende Last zu treiben.

Bevorzugt ist der DC/DC-Umsetzer zusätzlich ausgebildet, die eine Energiezelle oder die Serienschaltung von Energiezellen aus einer am ersten Ausgangsterminal anliegenden Spannung aufzuladen. Der DC/DC-Umsetzer fungiert somit in einem Generatorbetrieb als Ladegerät für den ersten Energiespeicher. Am Beispiel eines Kraftfahrzeuges mit elektrischem Antriebsmotor läge bei Abbremsen des Fahrzeuges oder durch einen mit einem ggf. vorhandenen Verbrennungsmotor verbundenen Generator Generatorbetrieb vor, in dem die elektrische Antriebsbatterie aufgeladen werden soll. Die Funktion des Ladegerätes kann so kostengünstig von dem ohnehin vorhandenen DC/DC-Umsetzer übernommen werden.

In den Ausführungen mit DC/DC-Umsetzer kann der zweite Energiespeicher ein drittes Ausgangsterminal aufweisen, welches mit einem Eingang des DC/DC-Umsetzers verbunden ist, so dass der zweite Energiespeicher und die Energiezelle oder die Energiezellen des ersten Energiespeichers in Serie geschaltet sind. Dadurch kann die vom zweiten Energiespeicher selbst ausgangsseitig erzeugte Spannung gering gewählt werden, da sich aufgrund der ausgangsseitigen Serienschaltung zu dieser Spannung die Ausgangsspannung der Batteriezellen des ersten Energiespeichers addiert. Der DC/DC-Umsetzer erzeugt dabei eine Ausgangsspannung, die höher als die Summe der Spannungen der Batteriezellen des ersten und des zweiten Energiespeichers ist.

Das Batteriemodul kann ein Ladegerät aufweisen, welches mit dem ersten Energiespeicher und dem zweiten Energiespeicher verbunden und ausgebildet ist, dem ersten Energiespeicher Energie zu entnehmen und dem zweiten Energiespeicher zuzuführen und den zweiten Energiespeicher so aufzuladen. Diese Konfiguration bietet den Vorteil, dass der erste Energiespeicher als Hauptenergiespeicher fungiert, dem der zweite Energiespeicher nur in Ausnahmefällen hinzugeschaltet wird. Der zweite Energiespeicher kann bei Bedarf dann aus dem Energievorrat des ersten Energiespeichers wieder aufgeladen werden.

Vorzugsweise ist das Ladegerät als Hochsetzsteller realisiert.

Ein zweiter Erfindungsaspekt führt eine Antriebsbatterie mit einer Mehrzahl von Batteriemodulen gemäß dem ersten Erfindungsaspekt ein. Die Batteriemodule können ausgangsseitig in Serie oder parallel geschaltet sein. Durch den modularen Aufbau kann eine Batterie leicht durch Wahl der benötigten Anzahl Batteriemodule an eine gegebene Anforderung angepasst oder ggf. zu einem späteren Zeitpunkt erweitert werden.

Ein dritter Erfindungsaspekt führt ein Kraftfahrzeug mit einem elektrischen Antriebsmotor zum Antreiben des Kraftfahrzeuges und einer mit dem elektrischen Antriebsmotor verbundenen Antriebsbatterie gemäß dem zweiten Erfindungsaspekt ein.

### Kurzbeschreibung der Abbildungen

Die Erfindung wird im Folgenden anhand von Abbildungen von Ausführungsbeispielen näher erläutert. Es zeigen:
Fig. 1 ein Blockdiagramm eines ersten nicht-erfindungsgemäßen Ausführungsbeispiels;
Fig. 2 ein Blockdiagramm eines zweiten Ausführungsbeispiels der Erfindung; und
Fig. 3 Beispiele für die Verschaltung mehrerer Batteriemodule.

### Detaillierte Beschreibung der Abbildungen

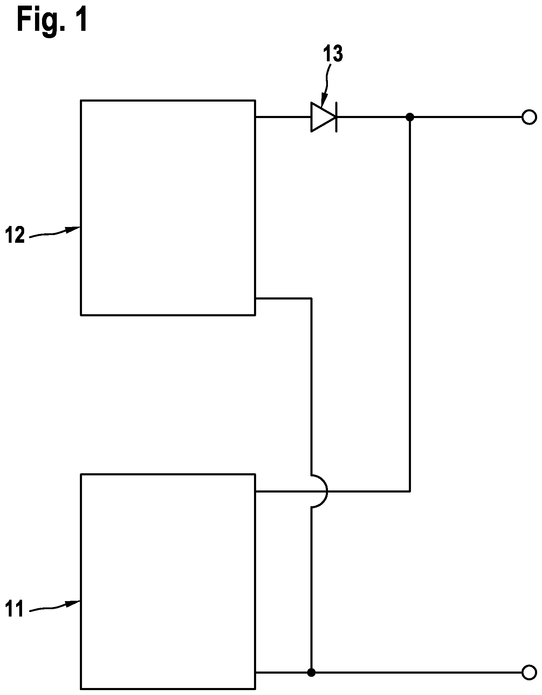

Fig. 1 zeigt ein Blockdiagramm eines ersten nicht-erfindungsgemäßen Ausführungsbeispiels. Ein erster Energiespeicher 11 und ein zweiter Energiespeicher 12 sind ausgangsseitig miteinander verschaltet. Eine Diode 13 koppelt den Ausgang des zweiten Energiespeichers 12 von dem des ersten Energiespeichers 11 ab, solange die Ausgangsspannung des ersten Energiespeichers 11 höher als die des zweiten Energiespeichers 12 ist. Bricht die Ausgangsspannung des ersten Energiespeichers 11 aufgrund einer hohen Belastung, die aus dem ersten Energiespeicher 11 allein nicht getrieben werden kann, ein, wird die Diode 13 automatisch in Vorwärtsrichtung gespannt und schaltet durch, so dass der zweite Energiespeicher 12 dem ersten Energiespeicher 11 zur Seite tritt und denjenigen Anteil der Leistung, die der ersten Energiespeicher 11 nicht zur Verfügung stellen kann, wird vom zweiten Energiespeicher 12 zur Verfügung gestellt. Die Kapazität des zweiten Energiespeichers 12 kann dabei gegenüber der des ersten Energiespeichers 11 klein gewählt werden, da der zweite Energiespeicher 12 nur in Ausnahmefällen aktiviert wird. Der erste Energiespeicher 11 enthält vorzugsweise Batteriezellen, die auf einen hohen Energiegehalt pro Volumen optimiert wurden, während der zweite Energiespeicher 12 im Vergleich dazu Batteriezellen enthält, die einen geringeren Energiegehalt, aber eine höhere maximale Ausgangsleistung bereitstellen.

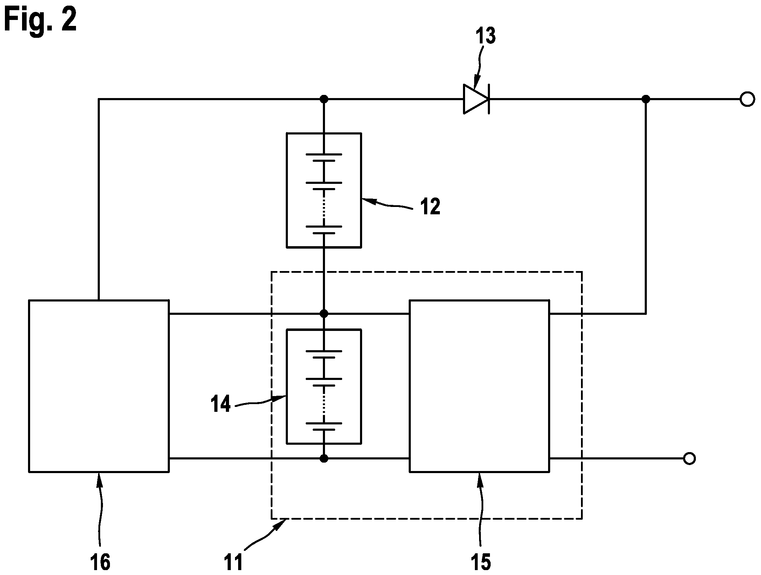

Fig. 2 zeigt ein Blockdiagramm eines zweiten Ausführungsbeispiels der Erfindung. Der erste Energiespeicher 11 umfasst hierbei einen Batteriezelle oder eine

Serienschaltung von Batteriezellen 14, welche mit den Eingängen eines DC/DC-Umsetzers 15 verbunden sind. Der zweite Energiespeicher 12 kann ebenfalls eine Batteriezelle oder eine Serienschaltung von Batteriezellen enthalten. Der DC/DC-Umsetzer 15 ist ausgebildet, aus der Spannung der Batteriezellen 14 eine höhere Ausgangsspannung zu erzeugen. Im gezeigten Beispiel sind die Batteriezellen 14 des ersten Energiespeichers mit dem zweiten Energiespeicher 12 in Serie geschaltet, so dass die Spannung an der Anode der Diode 13 der Summe der Spannungen des zweiten Energiespeichers 12 und der Batteriezellen 14 des ersten Energiespeichers 11 entspricht. Daher ist hier der DC/DC-Umsetzer 15 eingerichtet, eine höhere Ausgangsspannung als die Summe der Spannungen des zweiten Energiespeichers 12 und der Batteriezellen 14 des ersten Energiespeichers 11 zu erzeugen. Erst wenn der ersten Energiespeicher 11 bzw. der DC/DC-Umsetzer 15 eine geforderte Leistung nicht mehr zur Verfügung stellen kann, wird die Spannung des DC/DC-Umsetzers 15 einbrechen, wodurch die Diode 13 in Vorwärtsspannung geschaltet wird und somit den zweiten Energiespeicher 12 zusätzlich mit dem Ausgang der Gesamtanordnung verbindet.

Mit den Polen der Batteriezellen 14 des ersten Energiespeichers 11 bzw. den Eingängen des DC/DC-Umsetzers 15 ist außerdem ein optionales Ladegerät 16 verbunden, welches vorzugsweise als Hochsetzsteller verwirklich ist. Das Ladegerät 16 kann den Batteriezellen 14 des ersten Energiespeichers 11 Energie entnehmen, daraus eine Ladespannung für den zweiten Energiespeicher 12 erzeugen und so einen Energietransfer vom ersten Energiespeicher 11 zum zweiten Energiespeicher 12 bewirken. Dabei kann zwischen dem zweiten Energiespeicher 12 und den Ausgang der Gesamtanordnung in Serie zur Diode 13 ein Schalter geschaltet werden, um zu verhindern, dass die Ladespannung einen Strompfad durch die Diode 13 schaltet.

Der DC/DC-Umsetzer ist vorzugsweise ausgebildet, eine an den Ausgängen der Gesamtanordnung anliegende Spannung (z.B. eine Spannung eines Gleichspannungszwischenkreises, an den das Batteriemodul angeschlossen ist) in eine Ladespannung für die Batteriezellen 14 umzusetzen und so die Batteriezellen 14 des ersten Energiespeichers 11 aufzuladen.

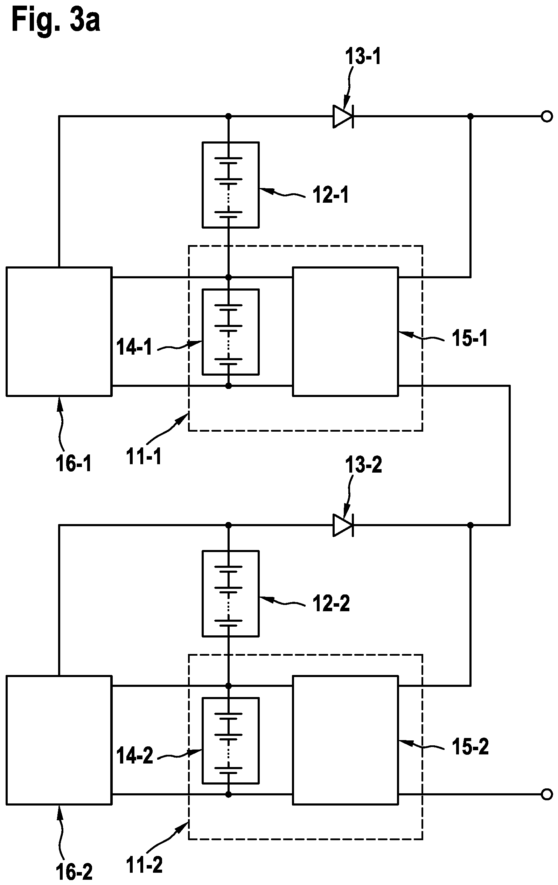

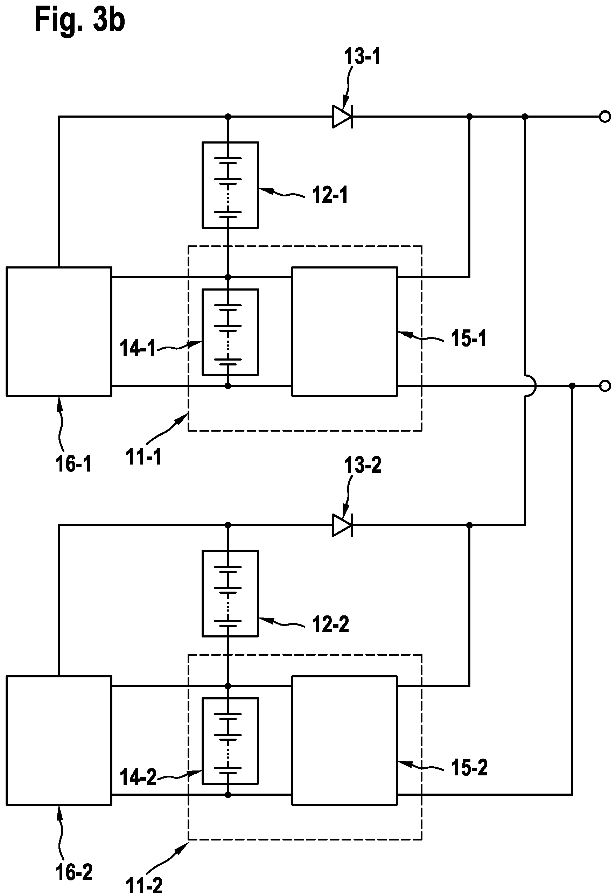

Fig. 3 zeigt Beispiele für die Verschaltung mehrerer Batteriemodule anhand zweier Teilabbildungen. Fig. 3A zeigt hierbei die Serienschaltung zweier Batteriemodule, während Fig. 3B eine Parallelschaltung zweier Batteriemodule illustriert. Selbstverständlich ist die Zahl von Batteriemodulen in beiden Fällen nicht auf zwei beschränkt.

## Patentansprüche

1. Ein Batteriemodul mit einem ersten Energiespeicher (11), welcher wenigstens eine Energiezelle, bevorzugt eine Serienschaltung von Energiezellen umfasst, einem zweiten Energiespeicher (12) und einer Diode (13), wobei der erste Energiespeicher (11) ausgebildet ist, eine erste Ausgangsspannung zu erzeugen und an einem ersten Ausgangsterminal auszugeben, und der zweite Energiespeicher (12) ausgebildet ist, eine zweite Ausgangsspannung, niedriger als die erste Ausgangsspannung, zu erzeugen und an einem zweiten Ausgangsterminal auszugeben, wobei die Diode (13) eine mit dem ersten Ausgangsterminal verbundene Kathode und eine mit dem zweiten Ausgangsterminal verbundene Anode aufweist, **dadurch gekennzeichnet, dass** der erste Energiespeicher (11) einen DC/DC-Umsetzer (15) aufweist, welcher eingangsseitig mit der einen Energiezelle oder der Serienschaltung von Energiezellen und ausgangsseitig mit dem ersten Ausgangsterminal verbunden ist, wobei der zweite Energiespeicher (12) mit einem Eingang des DC/DC-Umsetzers (15) des ersten Energiespeichers (11) verbunden ist, so dass der zweite Energiespeicher (12) und die Energiezelle oder die Energiezellen des ersten Energiespeichers (11) in Serie geschaltet sind.

2. Das Batteriemodul von Anspruch 1, bei der der zweite Energiespeicher (12) wenigstens eine Leistungszelle, bevorzugt eine Serienschaltung von Leistungszellen, enthält.

3. Eine Antriebsbatterie mit einer Mehrzahl von Batteriemodulen nach einem der vorhergehenden Ansprüche, wobei die Batteriemodule ausgangsseitig in Serie oder parallel geschaltet sind.

4. Ein Kraftfahrzeug mit einem elektrischen Antriebsmotor zum Antreiben des Kraftfahrzeuges und einer mit dem elektrischen Antriebsmotor verbundenen Antriebsbatterie nach Anspruch 3.

## Claims

1. Battery module having a first energy store (11) that comprises at least one energy cell, preferably a series circuit of energy cells, a second energy store (12) and a diode (13), wherein the first energy store (11) is designed to generate a first output voltage and to output said first output voltage at a first output terminal and the second energy store (12) is designed to generate a second output voltage that is lower than the first output voltage and to output said second output voltage at a second output terminal, wherein the diode (13) has a cathode that is connected to the first output terminal and an anode that is connected to the second output terminal, **characterized in that** the first energy store (11) has a DC/DC converter (15), which is connected on the input side to the one energy cell or the series circuit of energy cells and on the output side to the first output terminal, wherein the second energy store (12) is connected to an input of the DC/DC converter (15) of the first energy store (11) such that the second energy store (12) and the energy cell or the energy cells of the first energy store (11) are connected in series.

2. Battery module according to Claim 1, in which the second energy store (12) contains at least one power cell, preferably a series circuit of power cells.

3. Drive battery having a plurality of battery modules according to either of the preceding claims, wherein the battery modules are connected in series or in parallel on the output side.

4. Motor vehicle having an electric drive motor for driving the motor vehicle and a drive battery according to Claim 3 that is connected to the electric drive motor.

## Revendications

1. Module de batterie comprenant un premier accumulateur d'énergie (11), lequel comprend au moins une cellule d'énergie, de préférence un circuit série composé de cellules d'énergie, un deuxième accumulateur d'énergie (12) et une diode (13), le premier accumulateur d'énergie (11) étant configuré pour générer une première tension de sortie et la délivrer sur une première borne de sortie, et le deuxième accumulateur d'énergie (12) étant configuré pour générer une deuxième tension de sortie, inférieure à la première tension de sortie, et la délivrer sur une deuxième borne de sortie, la diode (13) possédant une cathode reliée à la première borne de sortie et une anode reliée à la deuxième borne de sortie, **caractérisé en ce que** le premier accumulateur d'énergie (11) possède un convertisseur CC/CC (15) dont l'entrée est reliée à ladite cellule d'énergie ou au circuit série composé de cellules d'énergie et dont la sortie est reliée à la première borne de sortie, le deuxième accumulateur d'énergie (12) étant relié à une entrée du convertisseur CC/CC (15) du premier accumulateur d'énergie (11) de telle sorte que le deuxième accumulateur d'énergie (12) et la cellule d'énergie ou les cellules d'énergie du premier accumulateur d'énergie (11) sont branchés en série.

2. Module de batterie selon la revendication 1, avec lequel le deuxième accumulateur d'énergie (12) contient au moins une cellule de puissance, de préférence un circuit série composé de cellules de puissance.

3. Batterie de propulsion comprenant une pluralité de modules de batterie selon l'une des revendications précédentes, les modules de batterie étant branchés en série ou en parallèle au niveau de leurs sorties.

4. Véhicule automobile équipé d'un moteur de propulsion électrique destiné à la propulsion du véhicule automobile et d'une batterie de propulsion selon la revendication 3, reliée au moteur de propulsion électrique.
